# EUROPEAN PATENT SPECIFICATION

(11) **EP 2 588 799 B1**
(45) Date of publication and mention of the grant of the patent: **06.09.2017**
(21) Application number: 11751934.8
(22) Date of filing: 01.07.2011
(51) Int. Cl.: F21S 6/00, F21V 17/10, F21V 21/28

(54) **LAMP**
LAMPE
LAMPE

(30) Priority: 01.07.2010 IT BO20100426
(43) Date of publication of application: 08.05.2013
(73) Proprietor: Benocci, Sergio, 50129 Firenze IT (IT)
(72) Inventor: BENOCCI, Paolo, I-50126 Firenze (IT); CATALANO, Enio, I-50126 Firenze (IT)
(74) Representative: Barberi, Vittorio
(86) International application number: PCT/IB2011/001546
(87) International publication number: WO 2012/001505

(56) References cited:
- EP-A2- 1 160 508
- EP-A2- 2 017 416
- WO-A1-94/09314
- DE-A1-102005 040 353
- FR-A- 967 637
- US-A- 2 533 494
- US-A- 4 858 092
- US-B1- 7 322 716
- DATABASE WPI Week 200948 Thomson Scientific, London, GB; AN 2009-L58785 XP002615488, & KR 100 905 912 B1 (LT ELECTRONICS CO LTD) 2 July 2009 (2009-07-02)

## Description

The present invention relates to a lamp.

In particular, the lamp of the invention is a lamp with a modular structure that can assume different configurations.

The present lamp consists of a plurality of elements that are assembled together to form an object provided with high functionality and, at the same time, able to provide a considerable aesthetic effect.

DE-102005040353A1 describes a lamp comprising a support structure consisting of elements hinged together that allow to place the lamp according to different configurations. In the normal use of the lamp described in this document is not possible to remove the elements of the lamp structure to change the appearance of the same lamp when desired.

The aim of the present invention is therefore to provide a lamp that allows the change of the appearance and of the configuration of the same lamp.

With this lamp it is possible to disassociate easily and quickly the elements which form the structure of the lamp to give rise to different conformations of the same structure, with corresponding different effects both in the manner of light projection for the form taken by lamp.

This result was achieved in accordance with the invention by adopting the idea of a material, a method and an article having the characteristics described in the independent claims. Other features are described in the dependent claims.

Every technician who works in this field will better understand these advantages and features and further advantages and features of the present invention thanks to the enclosed drawings as a practical explanation of the present invention which should not be considered in a limitative sense, wherein:
- Fig. 1 is a schematic perspective view of a possible embodiment of the present invention;
- Figs. 2A, 2B, 2C relate to a possible example of an element forming the modular structure of the lamp represented, respectively, in a plan view (2A), in a side view (2B), and in a perspective view (2C) wherein it is connected to another element;
- Figs. 3A, 3B relate to a possible example of another element forming the modular structure of the lamp represented, respectively, in a plan view (3A) and in a side view (3B);
- Figs. 4A, 4B, 4C relate to a possible example of an additional element forming the modular lamp represented, respectively, in a plan view (4A), in a side view (4B), and in a perspective view (4C) wherein it is connected to another element;
- Figs. 5A, 5B relate to a possible example of another further element forming the modular structure of the lamp represented, respectively, in a plan view (5A) and a side view (5B);
- Fig 6 is a schematic side view of a lamp in accordance with the invention, shown in different configurations of use;
- Figs. 7A, 7B illustrate two examples of possible connection among the modular elements of the lamp, represented in a schematic sectional view; in particular, Fig.7A shows the connection between two elements, Fig.7B among three elements;
- Fig. 8 illustrates a schematic perspective view of a different example of connecting the modular elements of the lamp;
- Fig.9 relates to a plan view of another embodiment of the invention;
- Fig. 10 shows a cylindrical connection element, represented in perspective view.

With reference to the attached drawings, a lamp (1) made in accordance with the invention is of the type comprising a support structure and a lighting element, i.e. an element diffusing light.

In accordance with the invention, the structure of the lamp (1) comprises a plurality of modular elements (2, 2a, 2b) hinged together by releasable connections, each of these elements being provided with means for transmitting the electrical power for said lighting element.

In particular, the modular elements (2, 2a, 2b) are connected to form a structure composed of a series of modular elements connected in cascade to each other.

The modular elements (2, 2a, 2b) are therefore provided with coupling portions that allow the solvable cascade according to different configurations.

In practice, the modular units (2, 2a, 2b) have a polygonal shape with at least two sides which define corresponding anchoring portions for the next modular element. When the modular element is triangular in shape, three sides can be used for connections. For example, a triangular modular element can be connected upstream at a first side, leaving its other two sides available for two different connections downstream to the next element of the structure.

In other words, the modular units (2, 2a, 2b) have a shape, preferably polygonal, which allows to vary the shape of the lamp, changing the side or the sides of the polygon used for the cascade connection between the various elements.

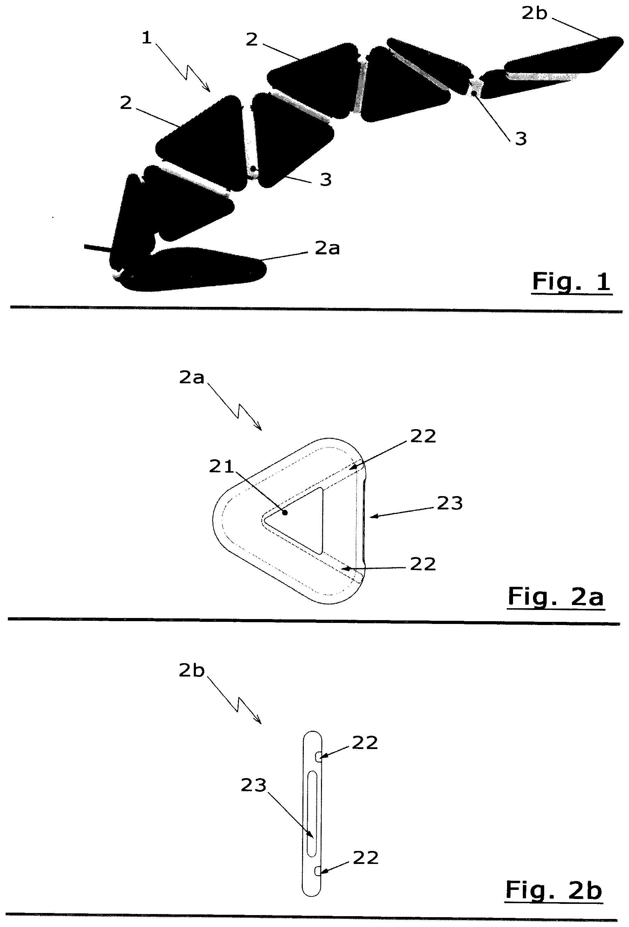

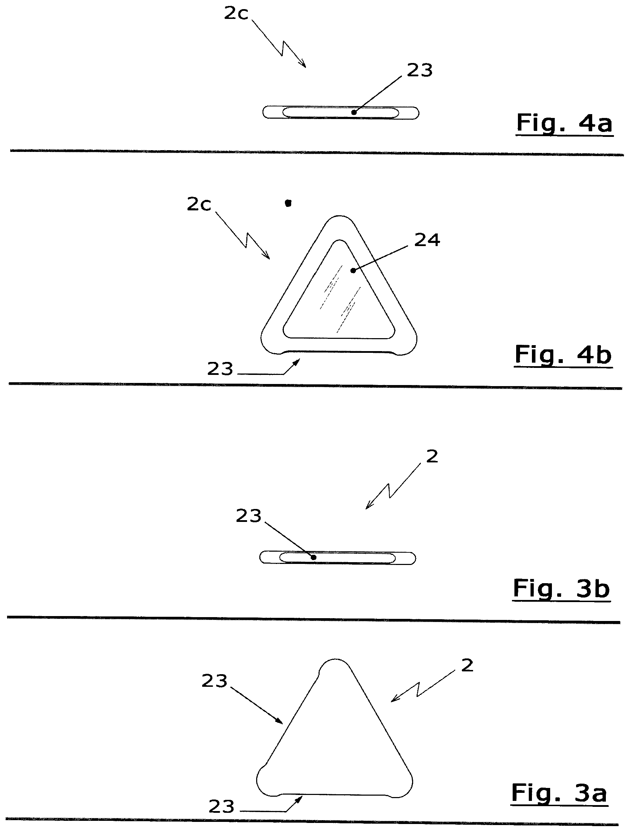

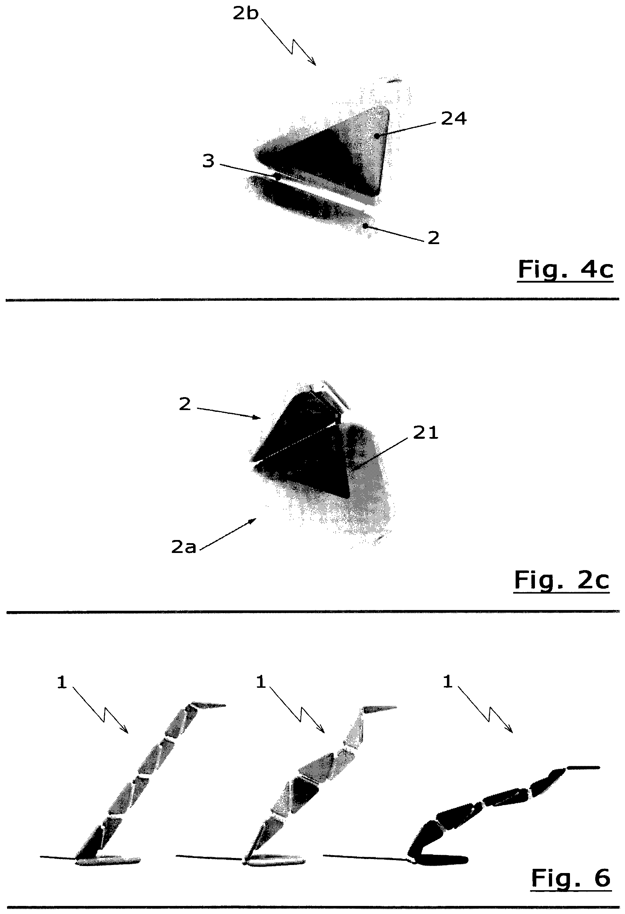

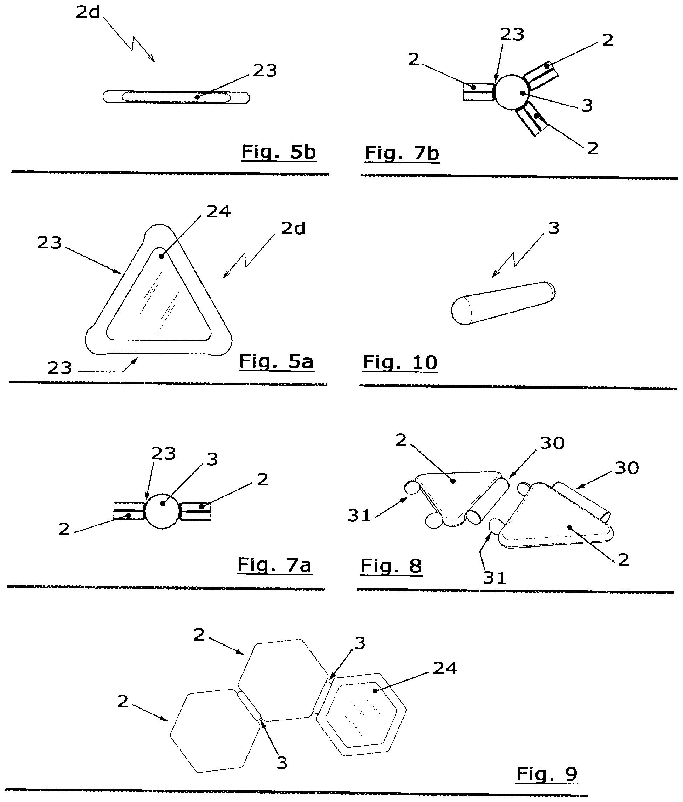

In practice, referring to the example shown in Figs. 1-8, the modular elements are substantially planar and have, in plan view, an equilateral triangular shape; in addition, at least one of their sides are hinged with at least one other modular element to form a sort of continuous chain that includes a proximal modular element or base (2a), at least one intermediate element (2) and a distal element (2b) which supports said diffusing element (24). In particular, with reference to the example of Figs. 1-7, the modular elements (2, 2a, 2b) are provided with at least a flare or countersink (23) capable of stably accommodate a cylindrical coupling element (3), shown in Fig.10.

In particular, the base element (2a) has a weight suitable to support the remaining part of the structure of the lamp (1), even when the modular units are in "cantilever" configuration, i.e. when their projection is outside the base (2a). The base (2a) is also provided with a switch (21) that, advantageously but not exclusively, can be either gradually adjusted or "dimmable." The switch (21), in a known way, is connected upstream to an electrical network, such as through an AC / power adapter, and downstream, through the hinge defined by the cylinder (3), is electrically connected to the modular element (2) adjacent to it. In the lower face of the element (2a), there are two channels (22) for the passage of the power cord, both on one side and on the other.

The intermediate elements (2) are provided with at least two grooves (23) for the connection to upstream and downstream with the same number of modular elements. In the embodiment of Figs. 1-7, 9 and 10, the union among the modular elements is magnetic. In practice, the modular elements (2, 2a, 2b, 2c) are made of material with ferromagnetic properties and the cylinders (3) are magnets.

In addition, the two grooves (23) of each intermediate element are electrically connected to each other, for example using a specific filament inlaid in the element, or by the same material that forms the element. In this way an electrical connection between the proximal part of the base (2a) and distal element (2b) that supports the light source (24) has been determined; the light source (24) may include LED devices.

In the example shown in Fig.7, two elements (2) are connected by means of the hinge defined by the magnetic cylinder (3); in Fig.7B the magnetic connection is made among three modular elements (2).

As mentioned previously, the modular elements are substantially planar and have, in plan, the form of a regular polygon. Experimentally the equilateral triangular shape resulted as the best suited to this application. This does not exclude other alternative embodiments, such as hexagon, shown in Fig.9.

The diffuser element (24) can also be placed on an intermediate element (2c). In this case, as shown in Figs.5A-B, the element (2c) has two grooves (23) for the connection both upstream and downstream.

The size of the modular units can be the same for all the elements, or, as in Figsg.1-6, the basic element (2a) can be larger.

In the case of a magnetic connection, the "friction" with which each modular element can rotate with respect to the directly connected is also determined by the type of magnet used to produce the cylinder (3).

In the example of Fig.8, the releasable connection between the modules (2) is realized by a hinge formed by a cylindrical body that defines a semi-hinge (30) coupled with two hollow seats (31) forming a complementary semi-hinge. In practice, one or more sides of the modular element (2) may be provided with cylinders (30) and seats (31) to define a pair of hinges of non-magnetic type.

From the above the extreme flexibility of the invention lamp is understood, with significant positive implications both on the formal and the functional aspects, thanks to the high variety of configurations that can be assumed, and to the high aesthetic effect.

Depending on the size, the lamp can be used as a table lamp, as a floor lamp, wall and even ceiling lamp.

Furthermore, regarding the packaging, the lamp may be sold in separate pieces to assemble according to the tastes and abilities of the user, with essentially unlimited ability to change conformation.

In practice, the construction details may vary in any equivalent way as regards the shape, dimensions, disposition of elements, nature of the used material, without nevertheless departing from the scope of the adopted solution idea and thereby remaining within the limits of the protection granted to the present patent.

## Claims

1. A lamp (1) comprising a support structure and a lighting element (24), wherein:
- said structure comprises a plurality of modular elements (2, 2a 2b) which can be hinged together by means of releasable connections to form a structure composed of a succession of said modular elements (2, 2a, 2b) connected in cascade to each other;
- each of these elements (2, 2a, 2b) is provided with means of transmitting electrical power to said lighting element (24);
- said modular elements (2, 2a, 2b) are provided with releasable coupling portions that allow the solvable cascade connection according to different configurations;
- said modular elements (2, 2a, 2b) are hinged by means of a magnetic connection,
**characterized in that**:
said modular elements (2, 2a, 2b) have a polygonal shape with at least two sides which define corresponding anchoring portions for a next modular element, said polygonal shape allowing to vary the shape of the lamp, changing the sides of the polygon used for the cascade connection between the various elements.

2. Lamp (1) according to claim 1, **characterized in that** it comprises a proximal element or base (2a), at least an intermediate element (2) and a distal element (2b) which supports said lighting element (24), said modular elements (2, 2a, 2b) being provided with at least a concavity or seat (23) which is suitable to stably accept a cylindrical coupling element (3).

3. Lamp (1) according to one of the previous claims, **characterized in that** it comprises a proximal element or base (2a), at least an intermediate element (2) and a distal element (2b) which supports said lighting element, said base element (2a) having a weight suitable to support the structure formed by said associated modular elements (2, 2a, 2b), also with a the structure cantilever disposed.

4. Lamp according to one or more of the previous claims, **characterized in that** said modular elements (2, 2a, 2b) have a substantially planar shape.

5. Lamp according to one or more of the previous claims, **characterized in that** said modular elements (2, 2a, 2b) are shaped in plan as a regular polygon.

6. Lamp according to claims 2 and 4, **characterized in that** said modular elements (2, 2a, 2b) are shaped, in plan view, as a regular polygon and that said seat (23) is disposed in correspondence of a side of said polygon.

7. Lamp according to claims 5 and/or 6, **characterized in that** the polygon is a equilateral triangle.

8. Lamp according to one or more of the previous claims, **characterized in that** it is provided with one or more elements (2c) which support said lighting element (24).

9. Lamp according to one or more of the previous claims, **characterized in that** it comprises modular elements (2, 2a, 2b; 2c) in ferromagnetic material and magnetic coupling cylinders.

10. Lamp (1) according to claim 2, **characterized in that** said cylindrical coupling element (3) is a cylinder being a magnet.

## Patentansprüche

1. Lampe (1), die eine Unterkonstruktion und ein Element zur Streuung des Lichts (24) umfasst, in der:
- besagte Konstruktion eine Mehrheit von Modulen (2, 2a, 2b) besitzt, die miteinander angelenkt verbunden sind und so gelöst werden können, dass eine Konstruktion der besagten Module (2, 2a, 2b), die einander in Kettenschaltung folgen, entsteht;
- jedes der besagten Elemente (2, 2a, 2b) verfügt über Übertragungsmittel für die Stromversorgung des besagten Elements zur Streuung;
- besagte Module (2, 2a, 2b) sind mit lösbaren Aufhängeteilen versehen, die entsprechend den verschiedenen Konfigurationen die Verbindung in Kettenschaltung ermöglichen;
- besagte Module (2, 2a, 2b) sind mittels einer magnetischen Kopplung miteinander angelenkt,
**dadurch gekennzeichnet, dass**:
besagte Module (2, 2a, 2b) eine polygonale Gestaltung mit mindestens zwei Seiten besitzen, die entsprechende Aufhängeteile für das folgende Modul festlegen, besagte polygonale Gestaltung ermöglicht die Änderung der Gestaltung der Lampe, wenn die Kettenschaltung zwischen den verschiedenen Modulen geändert wird.

2. Lampe (1) gemäß Anspruch 1, **dadurch gekennzeichnet, dass** diese ein proximales Element oder Basiselement (2a), mindestens ein mittleres Element (2) und ein distales Element (2b) umfasst, das besagtes Streuelement (24) hält, besagte modulare Elemente (2,2a,2b) verfügen über mindestens eine Konkavität oder ein Gehäuse (23), das geeignet ist, ein zylindrisches Verbindungselement (3) dauerhaft aufzunehmen.

3. Lampe (1) gemäß der vorherigen Ansprüche **dadurch gekennzeichnet, dass** diese ein proximales oder Basiselement (2a), mindestens ein mittleres Element (2) und ein distales Element (2b) umfasst, das besagtes Streuelement (24) hält, da besagtes Basiselement ein geeignetes Gewicht hat, die aus besagten miteinander verbundenen modularen Elementen (2,2a,2b) zu halten, auch wenn diese fliegende Struktur haben.

4. Lampe (1) gemäß einer oder mehrerer vorheriger Ansprüche, **dadurch gekennzeichnet, dass** besagte modulare Elemente (2,2a,2b) im Wesentlichen planar aufgebaut sind.

5. Lampe (1) gemäß einer oder mehrerer vorheriger Ansprüche, **dadurch gekennzeichnet, dass** die besagten modularen Elemente (2,2a,2b) im Grundriss aus einem regelmäßigem Polygon besteht.

6. Lampe (1) gemäß den Ansprüchen 2 und 3, **dadurch gekennzeichnet, dass** besagte modulare Element (2,2a,2b) im Grundriss aus einem regelmäßigem Polygon bestehen und dass sich besagtes Gehäuse (23) auf der Höhe einer Seite besagten Polygons befindet.

7. Lampe (1) gemäß Ansprüche 5 und/oder 6, **dadurch gekennzeichnet, dass** das Polygon aus einem gleichseitigen Dreieck besteht

8. Lampe (1) gemäß einem oder mehreren der vorherigen Ansprüche **dadurch gekennzeichnet, dass** diese mit einem oder mehreren Elementen (2c) versehen ist, die besagtes Streuelement (24) halten.

9. Lampe (1) gemäß einem der vorherigen Ansprüche **dadurch gekennzeichnet, dass** diese modulare Elemente umfasst (2,2a,2b,2c), die aus einem Material mit ferromagnetischen Eigenschaften und aus magnetischen zylindrischen Verbindungselementen besteht.

10. Lampe (1) gemäß Anspruch 2, **dadurch gekennzeichnet, dass** besagtes zylindrisches Verbindungselement (3) aus einem magnetischen Zylinder besteht.

## Revendications

1. Une lampe (1) comprenant une structure de support et un élément d'éclairage (24), dans laquelle:
- ladite structure comprend une pluralité d'éléments modulaires (2, 2a, 2b) qui peuvent être articulés ensemble au moyen de connexions détachables pour former une structure composée d'une succession desdits éléments modulaires (2, 2a, 2b) connectés en cascade à chacun autre;
- chacun de ces éléments (2, 2a, 2b) est muni de moyens de transmission d'énergie électrique audit élément d'éclairage (24);
- lesdits éléments modulaires (2, 2a, 2b) sont pourvus de parties de couplage détachables qui permettent la connexion en cascade résoluble selon différentes configurations;
- lesdits éléments modulaires (2, 2a, 2b) sont articulés au moyen d'une connexion magnétique,
**caractérisée en ce que**:
lesdits éléments modulaires (2, 2a, 2b) ont une forme polygonale avec au moins deux côtés qui définissent des parties d'ancrage correspondantes pour un élément modulaire suivant, ladite forme polygonale permettant de modifier la forme de la lampe, en changeant les côtés du polygone utilisé pour la connexion en cascade entre les différents éléments.

2. Lampe (1) selon la revendication 1, **caractérisée en ce qu'**elle comprend un élément proximal ou de base (2a), au moins un élément intermédiaire (2) et un élément distal (2b) qui supporte ledit élément d'éclairage (24), lesdits éléments modulaires (2, 2a, 2b) étant munis d'au moins une concavité ou un siège (23) apte à recevoir de manière stable un élément d'accouplement cylindrique (3).

3. Lampe (1) selon l'une quelconque des revendications précédentes, **caractérisée en ce qu'**elle comprend un élément proximal ou de base (2a), au moins un élément intermédiaire (2) et un élément distal (2b) qui supporte ledit élément d'éclairage, ledit de base (2a) ayant un poids approprié pour supporter la structure formée par lesdits éléments modulaires associés (2, 2a, 2b), également avec une structure disposée en porte-à-faux.

4. Lampe selon une ou plusieurs des revendications précédentes, **caractérisée en ce que** lesdits éléments modulaires (2, 2a, 2b) ont une forme substantiellement plane.

5. Lampe selon une ou plusieurs des revendications précédentes, **caractérisée en ce que** lesdits éléments modulaires (2, 2a, 2b) sont conformés en plan en tant que polygone régulier.

6. Lampe selon les revendications 2 et 4, **caractérisée en ce que** lesdits éléments modulaires (2, 2a, 2b) sont conformés, en vue de dessus, en tant que polygone régulier et **en ce que** ledit siège (23) est disposé en correspondance avec un côté de ladite polygone.

7. Lampe selon les revendications 5 et/ou 6, **caractérisée en ce que** le polygone est un triangle équilatéral.

8. Lampe selon une ou plusieurs des revendications précédentes, **caractérisée en ce qu'**elle comporte un ou plusieurs éléments (2c) qui supportent ledit élément d'éclairage (24).

9. Lampe selon une ou plusieurs des revendications précédentes, **caractérisée en ce qu'**elle comprend des éléments modulaires (2, 2a, 2b; 2c) en matériau ferromagnétique et des cylindres d'accouplement magnétique.

10. Lampe (1) selon la revendication 2, **caractérisée en ce que** ledit élément d'accouplement cylindrique (3) est un cylindre qui est un aimant.
